Europäisches Patentamt

European Patent Office

Office européen des brevets

(19)

(11) Veröffentlichungsnummer: **0 285 557 B1**

# (12) EUROPÄISCHE PATENTSCHRIFT

(45) Veröffentlichungstag der Patentschrift:
03.07.91 Patentblatt 91/27

(51) Int. Cl.⁵ : **B25J 15/04**

(21) Anmeldenummer: **88810151.6**

(22) Anmeldetag: **10.03.88**

(54) Vorrichtung zur lösbaren Befestigung von Werkzeugen an einem Handhabungsgerät.

(30) Priorität: **30.03.87 DE 3710472**

(43) Veröffentlichungstag der Anmeldung:
**05.10.88 Patentblatt 88/40**

(45) Bekanntmachung des Hinweises auf die
Patenterteilung:
**03.07.91 Patentblatt 91/27**

(84) Benannte Vertragsstaaten:
**AT BE CH DE ES FR GB GR IT LI LU NL SE**

(56) Entgegenhaltungen:
**DE-A- 3 151 532**
**FR-A- 2 554 043**
**US-A- 4 621 398**

(73) Patentinhaber: **Erowa AG**
**Winkelstrasse 8**
**CH-5734 Reinach (CH)**

(72) Erfinder: **Obrist, Basil**
**Neuhofstrasse 16**
**CH-5600 Lenzburg (CH)**

(74) Vertreter: **Rottmann, Maximilian R.**
**c/o Rottmann, Maspoli + Zimmermann AG**
**Glattalstrasse 37**
**CH-8052 Zürich (CH)**

EP 0 285 557 B1

## Beschreibung

Die vorliegende Erfindung bezieht sich auf eine Vorrichtung zur lösbaren Befestigung von Werkzeugen an einem Handhabungsgerät nach dem Oberbegriff des Patentanspruches 1 sowie auf eine Verwendung der Vorrichtung als Schnittstelle zur auswechselbaren Montage von pneumatisch und/oder elektrisch betätigten Werkzeugen an einem Industrie-Roboter.

Solche automatischen bzw. Rechner-gesteuerten Handhabungsgeräte erlangen mehr und mehr an Bedeutung bei der Be- und Verarbeitung von Werkstücken in Serien, zum Beispiel bei der Montage von Geräten und Apparaten, bei der Bestückung von elektrischen Leiterplatten usw. Diese Handhabungsgeräte besitzen eine Werkzeughalterung zur Aufnahme eines Werkzeuges, das innerhalb konstruktiv gesetzter Grenzen in mehreren Freiheitsgraden bewegt werden kann und mit dem das Werkstück bearbeitet wird. Der Begriff "Werkzeug" soll in diesem Zusammenhang bewusst breit verstanden werden ; es sind hier nicht nur Bearbeitungswerkzeuge wie Bohrmaschinen, Schraubendreher und dgl. gemeint, sondern auch Greifzangen, Vakuumgreifer, Kleberauftragevorrichtungen, Mess- und Prüfeinrichtungen, Be- und Entladevorrichtungen für Werkstückpaletten und dgl.

Solange ein derartiges Handhabungsgerät nur eine einzige Aufgabe zu erfüllen hat, z.B. des Ergreifen eines Einzelteiles aus einem Magazin und das Einsetzen desselben in ein Werkstück, das am Handhabungsgerät vorbeigeführt wird, bereitet die Montage des für diesen Zweck geeigneten Werkzeuges am Arm des Handhabungsgerätes keine Probleme. Wenn jedoch nur verhältnismässig kleine Serien bearbeitet werden, oder wenn ein einziges Handhabungsgerät mehrere Funktionen erfüllen soll, sollte gewährleistet sein, dass ein rascher und problemloser, möglichst vollautomatischer Werkzeugwechsel stattfinden kann.

Zu diesem Zweck wurde z.B. in der US-PS 4,636,135 eine Vorrichtung vorgeschlagen, die ein am Arm eines Roboters montiertes Kupplungsorgan und eine Werkzeugaufnahme umfasst, welche im Kupplungsorgan formschlüssig verriegelbar und lösbar befestigt ist. Da manche Werkzeuge, z.B. Greifzangen, pneumatisch und ggf. elektrisch gesteuert betätigt werden, wurde am Kupplungsorgan ein Druckluftanschluss vorgesehen, der bei befestigter Werkzeugaufnahme mit einem an dieser vorgesehenen Luftauslass kommuniziert, sowie eine elektrische Steckverbindung, die in einen Stecker an der Werkzeugaufnahme eingreift. Dadurch wurde erreicht, dass das z.B. pneumatisch und/oder elektrisch betätigte Werkzeug an der Werkzeugaufnahme vormontiert und mit der erforderlichen Druckluft-Verbindung zum Luftauslass an der Werkzeugaufnahme und/oder der elektrischen Verbindung versehen werden konnte.

Zwei Probleme wurden aber mit den bisher bekannten Befestigungsvorrichtungen nicht oder nur unbefriedigend gelöst : Zum einen sind diese Vorrichtungen nicht universell verwendbar, sondern nur gerade für solche pneumatisch betriebene Werkzeuge geeignet, die nur einen einzigen Luftanschluss erfordern. Weitere, z.B. zusätzliche Druckluft- oder Vakuum-Verbindungen mussten zusätzlich hergestellt werden, was natürlich einen automatischen Werkzeugwechsel ausschliesst. Zum anderen liess die Positioniergenauigkeit des Werkzeuges, insbesondere die Wiederholgenauigkeit, am Handhabungsgerät zu wünschen übrig. Da moderne Handhabungsgeräte an sich eine repetitive Positioniergenauigkeit in der Grössenordnung von 5/100 mm besitzen, werden an die Genauigkeit der Lage des Werkzeuges relativ zum Arm des Handhabungsgerätes zunehmend höhere Anforderungen gestellt. Dies ist besonders dann wichtig, wenn ein Handhabungsgerät universell eingesetzt werden soll, d.h. wenn ein häufiger Werkzeugwechsel stattfindet.

Aus der FR-A-2 554 043 ist eine Handhabungseinrichtung bekannt geworden mit einem beweglichen Transportarm, der an seinem Ende mit einem ersten Kupplungsorgan einer Kupplungsvorrichtung versehen ist. Am zweiten Kupplungsorgan der Kupplungsvorrichtung ist ein Greifer befestigt. Die Kupplungsvorrichtung umfasst alle für den Betrieb des Greifers erforderlichen Leitungen und ist derart ausgebildet, dass diese Verbindungen automatisch gekuppelt und entkuppelt werden können, wenn der Greifer gewechselt werden soll. Zwar sind hier eine Mehrzahl von Verbindungsleitungen (z.B. elektrischer und pneumatischer Natur) vorhanden, doch das Problem der exakten Zentrierung der beiden Kupplungsorgane gegeneinander ist nicht gelöst.

Es ist die Aufgabe der vorliegenden Erfindung, diese Nachteile zu vermeiden und eine Vorrichtung der eingangs genannten Art so weiterzubilden, dass sie universell für nahezu jedes beliebige am Handhabungsgerät anzubringende Werkzeug verwendbar ist, ohne dass neben dem eigentlichen Werkzeugwechsel irgendwelche pneumatischen und/oder elektrischen Verbindungen herzustellen wären, dass sie somit für einen vollautomatischen Werkzeugwechel geeignet ist, und dass sie eine ausserordentlich hohe Positioniergenauigkeit, insbesondere Wiederholgenauigkeit, besitzt.

Gemäss der Erfindung wird diese Aufgabe durch die im Kennzeichen des Patentanspruchs 1 angegebenen Massnahmen gelöst.

Damit ist einerseits erreicht, dass bei eingesetzter und verriegelter Werkzeugaufnahme alle elektrischen und pneumatischen Verbindungen zwischen Handhabungsgerät und Werkzeug selbsttätig hergestellt sind, da die Werkzeugaufnahme mit einer ihrer Flächen, von der die Kanäle und elektrischen Kontakte ausgehen, an die das vormontierte Werkzeug angeschlossen ist, gegen die freie Stirnfläche des Kupplungsorganes aufliegt, in welcher die geräteseitigen Kanäle und elektrischen Kontakte münden. Andererseits gewährleistet das Zusammenwirken der konisch verjüngten Zentrierzapfen und der Zentrieröffnungen in der axial elastischen Zentrierplatte, dass die Werkzeugaufnahme und damit das Werkzeug innerhalb kleinster Toleranzen nicht nur genau zentrisch, sondern auch winkelgerecht am Arm des Handhabungsgerätes befestigt ist.

Weiterbildungen des Erfindungsgegenstandes und besondere Ausführungsformen gehen aus den abhängigen Ansprüchen 2 bis 10 hervor.

Im folgenden wird ein Ausführungsbeispiel der erfindungsgemässen Vorrichtung, unter Bezugnahme auf die beiliegenden Zeichnungen, näher erläutert. In den Zeichnungen zeigen :

Fig. 1    eine schematische, teilweise geschnittene Gesamt-Seitenansicht der Vorrichtung in auseinandergenommenem Zustand ;

Fig. 2    eine Ansicht von oben auf das Kupplungsorgan, bei abgenommener Deckhaube ;

Fig. 3    einen Schnitt nach der Linie III-III in Fig. 2 ;

Fig. 4    einen Schnitt nach der Linie IV-IV in Fig. 2 ;

Fig. 5    einen Schnitt nach der Linie V-V in Fig. 2 ;

Fig. 6    eine Seitenansicht der Werkzeugaufnahme ;

Fig. 7    eine Ansicht der Werkzeugaufnahme von oben ; und

Fig. 8    einen Schnitt durch die Werkzeugaufnahme nach der Linie VIII-VIII in Fig. 7.

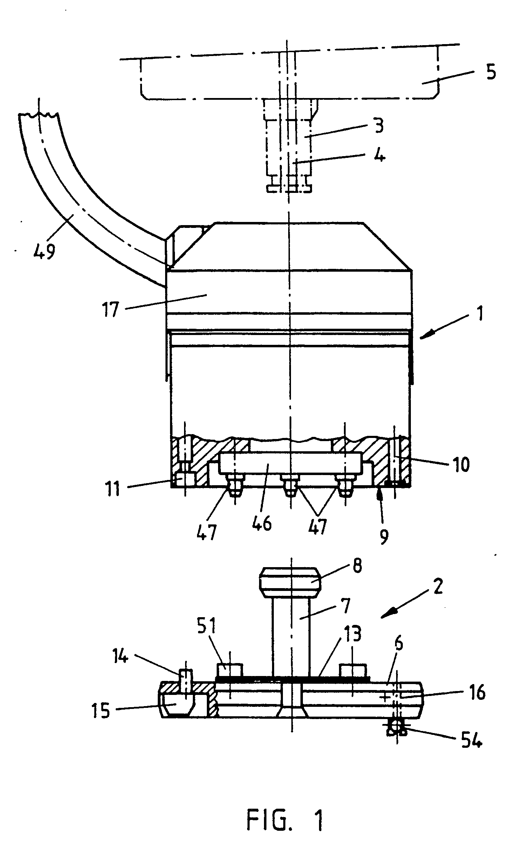

Gemäss Fig. 1 besteht die Vorrichtung generell aus einem Kupplungsorgan 1 und einer Werkzeugaufnahme 2. Das Kupplungsorgan 1 ist zur Montage an einem Schaft 3 am Armende 5 des Roboters ausgebildet; der Schaft 3 besitzt einen Luftkanal 4, über welchen das Kupplungsorgan 1 mit Druckluft versorgt wird. Die Werkzeugaufnahme 2 besitzt eine Montageplatte 6, auf welcher ein (nicht dargestelltes) Werkzeug, z.B. eine pneumatisch betätigte Greifzange oder dgl., befestigt werden kann.

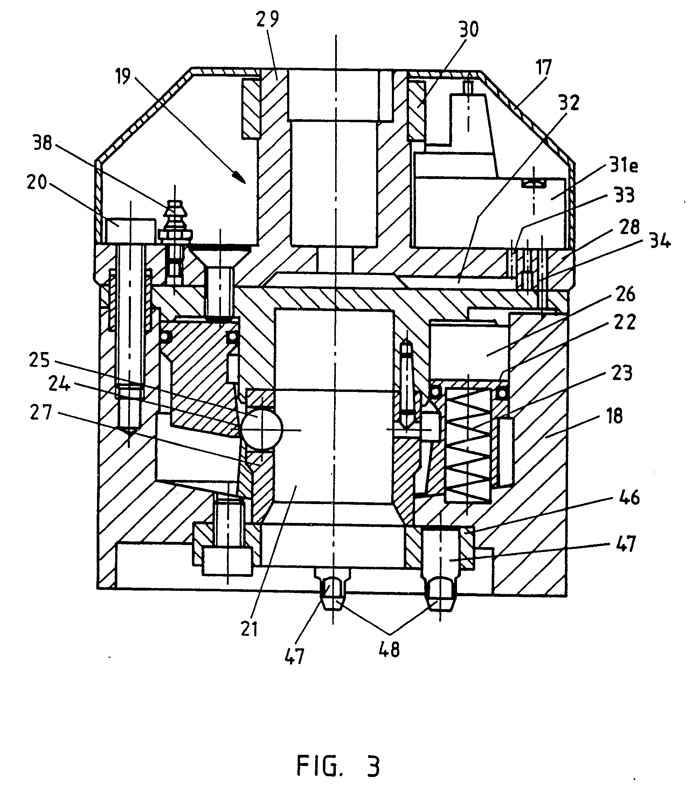

Die Montageplatte 6 weist einen zentrisch angeordneten, rechtwinklig abstehenden Verriegelungszapfen 7 auf, der zur Befestigung der Platte 6 im Kupplungsorgan 1 dient. Zu diesem Zweck ist der Verriegelungszapfen 7 mit einem Kopf 8 versehen, der in einer entsprechenden Bohrung im Kupplungsorgan 1 Aufnahme findet; diesbezügliche weitere Einzelheiten werden nachstehend im Zusammenhang mit Fig. 3 erläutert werden.

Das Kupplungsorgan 1 besitzt einen Randbereich 9, in welchem einerseits Luftkanäle 10 und andererseits elektrische Kontakte 11 münden. In der Mitte der freien Stirnfläche des Kupplungsorganes 1 sind vier vorstehende Zentrierzapfen 12 symmetrisch angeordnet, die mit einer Zentrierplatte 13 an der Werkzeugaufnahme 2 zusammenarbeiten. Die Montageplatte 6 der Werkzeugaufnahme 2 ist entlang des Randes einerseits mit elektrischen Kontakten 14, die zu Anschlussklemmen 15 führen, und andererseits mit Luftkanälen 16 versehen. Die Lage der Kontakte 14 und der Luftkanäle 16 ist derart, dass sie mit den Kontakten 11 und den Luftkanälen 10 korrespondieren, wenn die Werkzeugaufnahme 2 mit der Kupplungsvorrichtung 1 verbunden ist.

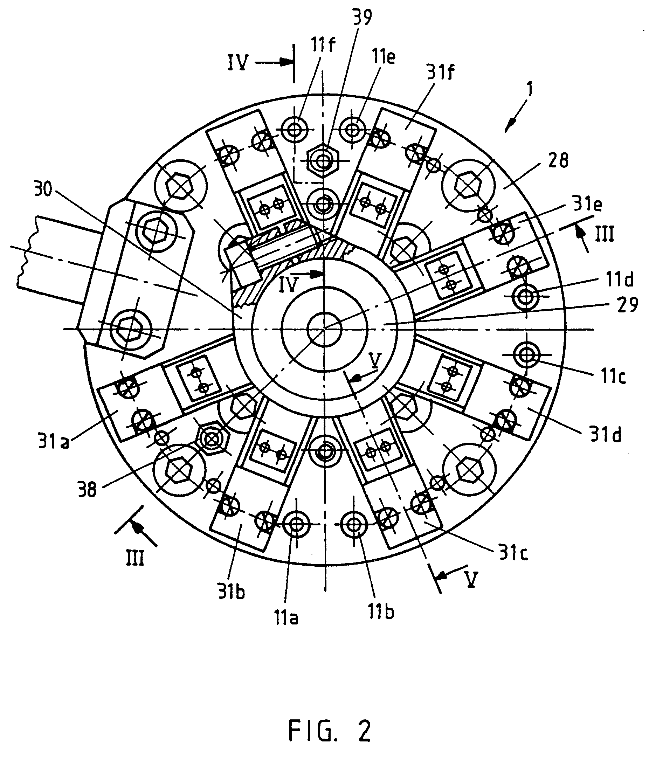

In der Fig. 2 ist das Kupplungsorgan 1 mit abgenommener Haube 17 in einer Ansicht von oben und in Fig. 3 in einem Querschnitt entlang der Linie III-III in Fig. 2 dargestellt. Das Kupplungsorgan 1 umfasst im wesentlichen einen Kupplungskörper 18 und einen Anschlusskörper 19, beide im Beispielsfall von runder Gestalt, die mittels Schrauben 20 fest miteinander verbunden sind. Der Kupplungskörper 18 weist eine zentrische Bohrung 21 zur Aufnahme des Verriegelungszapfens 7 und des Kopfes 8 der Werkzeugaufnahme 2 auf. Konzentrisch zur Bohrung 21 ist ein Ringkolben 22 axial verschiebbar gelagert, der unter Wirkung von Federn 23 in seine obere Endlage gedrückt wird. Hierbei verschieben abgeschrägte Seitenflächen 24 des Ringkolbens 22 Kugeln 25, die in der Wand 27 der Bohrung 21 gelagert sind, gegen die Bohrung 21 hin. Dabei wird der Kopf 8 des Verriegelungszapfens 7 untergriffen, somit der Zapfen 7 unter Vorspannung in der Bohrung 21 gehalten und die Montageplatte 6 der Werkzeugaufnahme 2 gegen die freie Stirnfläche 9 des Kupplungsorgans 1 gepresst wird. Diese verriegelte Lage ist in Fig. 3 links dargestellt.

Um die Werkzeugaufnahme 2 vom Kupplungsorgan 1 zu lösen wird in den Ringraum 26 oberhalb des Kolbens 22 Druckluft eingeführt, so dass sich letzterer gegen unten in die in Fig. 3 rechts gezeigte Lage bewegt; dadurch werden die Kugeln 25 freigegeben und der Verriegelungszapfen 7 kann aus der Bohrung 21 herausgezogen werden.

Der Anschlusskörper 19 des Kupplungsorganes 1 besitzt eine Grundplatte 28, die mit einem zentralen Luftanschluss-Stutzen 29 versehen ist. Die Befestigung des Kupplungsorganes 1 am Schaft 3 des Armendes 5 des Roboters erfolgt mittels einer Klemmbride 30. Auf der Grundplatte 28, um den Stutzen 29 herum, sind sternförmig eine Anzahl von elektromagnetisch betätigbaren Pneumatikventilen 31a-31g angeordnet. Im Beispielsfall handelt es sich um folgende Ventile : Zwei Ventile 31a und 31b für die Zufuhr von Luft mit reduzierten Druck, zwei Ventile 31c und 31d für die Zufuhr von Luft unter normalem Überdruck, zwei Ventile 31e und 31f für die Betätigung der Verriegelung der Werkzeugaufnahme 2 und ein Ventil 31g für die Zufuhr von Unterdruck.

Die Ventile 31c, 31d, 31e und 31f stehen eingangsseitig mit dem Hauptluftanschluss, ·d.h. dem Stutzen 29, in Verbindung, etwa wie es in Fig. 3 für das Ventil 31e gezeigt ist, über radiale Kanäle 32 und axiale Kanäle 33. Ausgangsseitig sind die Ventile 31e und 31f über axiale Kanäle 34 mit dem Ringraum 26 verbunden, während die Ventile 31c und 31d ausgangsseitig über die Grundplatte 28 durchdringende axiale Kanäle 35 mit Luftkanälen 36 kommunizieren, die sich durch den gesamten Kupplungskörper 18 hindurch bis zu dessen Stirnflächen-Randbereich 9 erstrecken und dort münden. Zwecks Abdichtung bei angesetzter Werkzeugaufnahme 2 ist zweckmässigerweise ein O-Ring 37 vorgesehen.

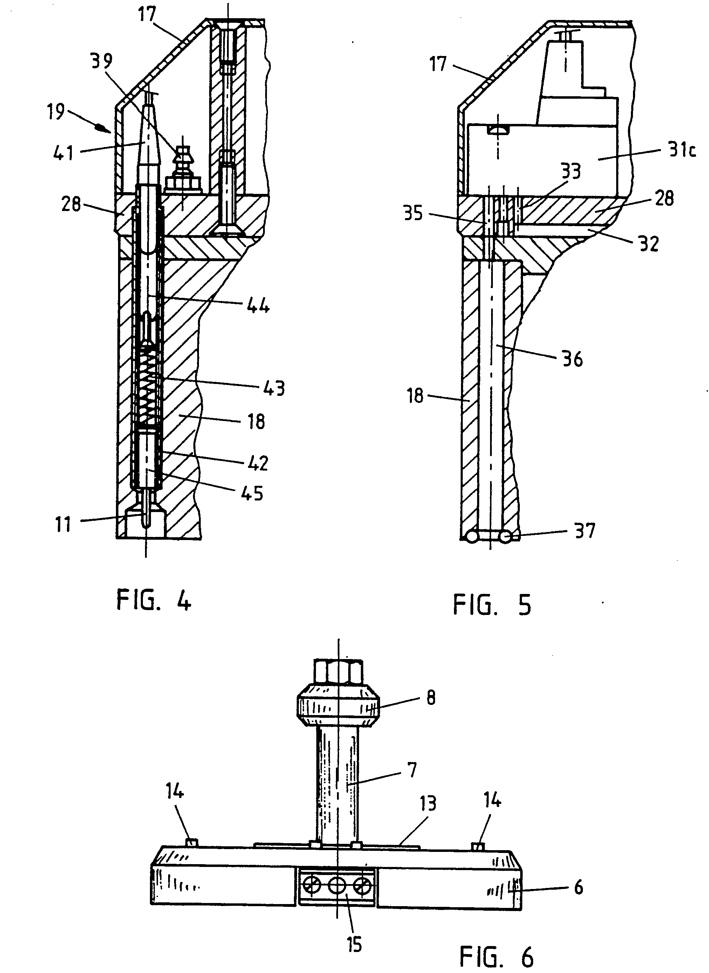

Die Ventile 31a und 31b stehen eingangsseitig mit einem separaten Luftzufuhr-Stutzen 38 in Verbindung, welchem über eine nicht dargestellte Leitung Druckluft mit geringerem Druck als die Hauptluft zugeführt wird. Ausgangsseitig münden die Ventile 31a und 31b über entsprechende Kanäle 35 und 36, wie in Fig. 5 im Zusammenhang mit dem Ventil 31c gezeigt, im Stirnflächen-Randbereich 9 des Kupplungsorganes 1. Das Ventil 31g schliesslich ist eingangsseitig an einen Stutzen 39 angeschlossen, der mit einer nicht dargestellten Vakuum-Leitung in Verbindung steht. Ausgangsseitig ist das Ventil 39g wiederum über ähnliche Kanäle 35 und 36 wie in Fig. 5 gezeigt mit dem Stirnflächen-Randbereich 9 verbunden.

Das Kupplungsorgan 1 ist ferner, wie bereits erwähnt, mit einer Anzahl elektrischer Kontakte 11 versehen. Zwei Kontaktstifte 11a und 11b erstrecken sich axial zwischen den Ventilen 31b und 31c, zwei Kontaktstifte 11c und 11d zwischen den Ventilen 31d und 31e und zwei Kontaktstifte 11e and 11f zwischen den Ventilen 31f und 31g durch die Grundplatte 28 und durch den Kupplungskörper 18 hindurch und münden wiederum im Stirnflächen-Randbereich 9. Die Kontaktstifte sind in einer Isolierhülse 42 aufgenommen und besitzen einen oberen, festen Teil 44 der mit einem Anschlussteil 41 in Verbindung steht, und einem unteren, axial beweglichen Teil 45, der in den eigentlichen Kontaktstift 11 übergeht und der sich gegen eine Feder 43 abstützt.

Schliesslich ist das Kupplungsorgan mit einem Zentrierkörper 46 versehen, der zentral im Bereich der freien Stirnfläche des Kupplungsorganes 1 etwas vertieft um die Öffnung 21 herum angeordnet ist. Der Zentrierkörper besitzt im Beispielsfall vier zentralsymmetrisch angebrachte und etwas über den Stirnflächen-Randbereich 9 des Kupplungsorganes 1 vorstehende Zentrierzapfen 47, die eine konisch verjüngte Spitze 48 aufweisen. Die Zentrierzapfen arbeiten in noch zu erläuternder Weise mit der Zentrierplatte 13 zusammen, die an der Montageplatte 6 der Werkzeugaufnahme 2 befestigt ist.

Zunächst lässt sich zusammengefasst festhalten, dass das Kupplungsorgan 1 durch einen kompakten Block gebildet ist, der mit seiner einen Seite am Armende 5 des Roboters angeschlossen ist, wobei der Hauptluftanschluss direkt durch den Roboterarm über den Luftkanal 4 in dessen Schaft 3 erfolgt, und aus dem alle weiteren pneumatischen und elektrischen Verbindungen, z.B. durch einen Anschluss 49 (Fig. 1) herausgeführt sind. Andernends steht eine frei zugängliche Stirnfläche 9 mit frei zugänglichen pneumatischen und elektrischen Anschlüssen sowie der Zentrierkörper 46 und die Aufnahmebohrung 21 für den Verriegelungszapfen 7 zur Verfügung.

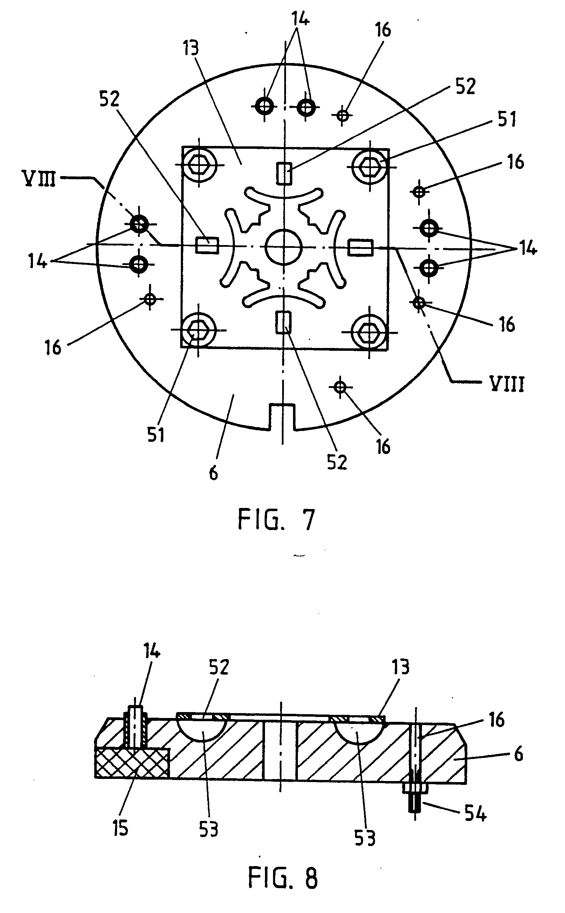

Gemäss Fig. 6 bis 8 weist die Montageplatte 6 der Werkzeugaufnahme 2 eine Zentrierplatte 13 auf, die z.B. mittels Schrauben 51 drehfest montiert und in Umfangsrichtung starr ist. Vorzugsweise besteht die Zentrierplatte 13 aus Federstahl und besitzt eine Anzahl von Zentrieröffnungen 52, die in Bezug auf Grösse, Form und Lage mit den Zentrierzapfen 47 korrespondieren. Wenn die Werkzeugaufnahme 2 an das Kupplungsorgan 1 angesetzt wird, wird der Kopf 8 des Verriegelungszapfen durch die Kugeln 25 in die Öffnung 21 hineingezogen und die Zentrierzapfen 47 tauchen mit ihrer verjüngten Spitze in die Zentrieröffnungen 52 ein, so dass diese zumindest teilweise übergriffen werden. Die Zentrierplatte 13 wird dabei in Axialrichtung elastisch verformt ; dies wird durch Hohlräume 53 in der Montageplatte 6 ermöglicht. Auf diese Weise ist eine äusserst genaue Positionierung der Montageplatte 6 am Kupplungsorgan 1 gewährleistet, wobei Ungenauigkeiten bzw. ein erhebliches Spiel oder Abnutzungserscheinungen zwischen Verriegelungszapfen 7 und Bohrung 21 für die Positioniergenauigkeit völlig unerheblich sind.

Weiter ist die Montageplatte 6 mit Luftkanälen 16 und mit elektrischen Kontakten 14 versehen. Die Lage der Kanäle 16 entspricht dabei der Lage der Kanäle 36 im Kupplungsorgan, und die Lage der Kontakte 14 entspricht der Lage der Kontakte 11 im Kupplungsorgan. Die Kanäle 16 sind an der freien Oberfläche der Montageplatte 6 zweckmässigerweise mit Anschluss-Stutzen 54 versehen, von welchen aus die erfordlichen pneumatischen Verbindungen zu einem auf der Montageplatte 6 montierten Werkzeug erfolgen. In entsprechender Weise stehen die elektrischen Kontakte 14 mit Anschlussklemmen 15 in Verbindung, um allfällige elektrische Verbindungen zu einem Werkzeug herstellen zu können.

Mit der vorgeschlagenen und vorstehend beispielsweise beschriebenen Vorrichtung ist die Möglichkeit gegeben, eine Mehrzahl von vormontierten Werkzeugen vorzusehen, die je an einer Werkzeugaufnahme 2 befestigt sind und bei denen alle erforderlichen pneumatischen und elektrischen Anschlüsse zwischen Werkzeugaufnahme 2 und Werkzeug bereits hergestellt sind. Wenn dann eine dermassen vorbereitete Werkzeugaufnahme 2 in das Kupplungsorgan 1 eingesetzt ist, sind selbsttätig diese pneumatischen und elektrischen Verbindungen zum Kupplungsorgan und damit zur Steuereinrichtung des Roboters geschlossen, da die Montageplatte 6 der Werkzeugaufnahme 2 statt auf dem freien Stirnflächenbereich 9 der Kupplungsvorrichtung 1 aufliegt, sobald die Werkzeugaufnahme 2 am Kupplungsorgan 1 verriegelt ist. Dadurch ist ein vollautomatischer Werkzeugwechsel ohne Zutun einer Bedienungsperson gewährleistet.

Die Zentrierung mit Zapfen 47 und Platte 13 bietet die erwünschte hohe Präzision in der Grössenordnung von plus/minus 0.01 mm, die sich insbesondere durch hohe Wiederholgenauigkeit, Umempfindlichkeit gegen Verschleiss und Verschmutzung sowie Einfachheit auszeichnet. Dadurch ist ein problemloser Dauerbetrieb auch mit häufigem Werkzeugwechsel bei kurzen Taktzeiten ermöglicht.

Im hier beschriebenen Beispiel sind sieben Ventile, sechs hindurchgeführte elektrische Anschlüsse und fünf hindurchgeführte pneumatische Anschlüsse vorgesehen, was wohl für die Mehrzahl der im gattungsgemässen Zusammenhang zu verwendenden Werkzeuge genügen dürfte. Die Vorrichtung besitzt demnach eine ausgezeichnete Universalität. Es versteht sich aber, dass bei Bedarf mehr oder weniger elektrische und/oder pneumatische Anschlüsse vorgesehen werden können.

## Ansprüche

1. Vorrichtung zur lösbaren Befestigung von Werkzeugen an einem Handhabungsgerät, mit einer Werkzeugaufnahme (2) und einem am Handhabungsgerät angebrachten Kupplungsorgan (1), in welchem die Werkzeugaufnahme formschlüssig verriegelt und lösbar befestigt ist, wobei das Kupplungsorgan (1) einen Druckluftanschluss, der bei befestigter Werkzeugaufnahme mit einem an dieser vorgesehenen Luftauslass kommuniziert, sowie elektrische Anschlüsse besitzt, die bei befestigter Werkzeugaufnahme mit an dieser vorgesehenen, elektrischen Verbindungselementen zusammenarbeiten, mit den folgenden Merkmalen :

a) das Kupplungsorgan besitzt eine freie Stirnfläche (9), gegen welche die befestigte Werkzeugaufnahme (2) anliegt, sowie eine Mehrzahl von Kanälen (36) und elektrischen Kontakten (11), die in der freien Stirnfläche (9) münden,

b) im Bereich der freien Stirnfläche (9) des Kupplungsorgans (1) ist eine Mehrzahl von vorstehenden, gegen die Spitze hin konisch verjüngten Zentrierzapfen (47) vorgesehen,

c) die Werkzeugaufnahme (2) besitzt einen zur Anlage an die freie Stirnfläche (9) des Kupplungsorgans (1) ausgebildeten Flächenabschnitt, der mit korrespondierend angeordneten Kanälen (16) und elektrischen Kontakten (14) versehen ist, gekennzeichnet durch das folgende Merkmal :

d) im Bereich des genannten Flächenabschnittes der Werkzeugaufnahme (2) ist eine in Umfangsrichtung starre Zentrierplatte (13) angeordnet, die korrespondierend zu den Zentrierzapfen (47) des Kupplungsorganes (1) angeordnete Öffnungen (52) besitzt, welche bei befestigter Werkzeugaufnahme den konisch verjüngten Teil (48) der Zentrierzapfen (47) derart übergreifen, dass die Zentrierplatte (13) im Bereich ihrer Öffnungen (52) in Axialrichtung elastisch deformiert wird.

2. Vorrichtung nach Anspruch 1, dadurch gekennzeichnet, dass das Kupplungsorgan (1) ferner mit einer Mehrzahl, den einzelnen Kanälen (36) zugeordneten, elektromagnetischen Ventilen (31) versehen ist.

3. Vorrichtung nach Anspruch 2, dadurch gekennzeichnet, dass zumindest ein Teil der elektromagnetischen Ventile (31c, 31d, 31e, 31f) eingangsseitig mit dem Druckluftanschluss (29) in Verbindung steht.

4. Vorrichtung nach Anspruch 2, dadurch gekennzeichnet, dass das Kupplungsorgan (1) mit einem weiteren Druckluftanschluss (38) versehen ist, der eingangsseitig mit mindestens einem der elektromagnetischen Ventile (31a, 31b) in Verbindung steht.

5. Vorrichtung nach Anspruch 2, dadurch gekennzeichnet, dass das Kupplungsorgan (1) ferner mit einem Saugluftanschluss (39) versehen ist, der eingangsseitig mit mindestens einem der elektromagnetischen Ventile (31g) in Verbindung steht.

6. Vorrichtung nach einem der vorangehenden Ansprüche, dadurch gekennzeichnet, dass die elektrischen Kontakte (11) des Kupplungsorganes in Axialrichtung federnde Stifte (45) aufweist, deren stirnflächenseitige Spitze (11) um einen geringen Betrag gegenüber der freien Stirnfläche (9) des Kupplungsorganes zurückversetzt ist.

7. Vorrichtung nach einem der vorangehenden Ansprüche, dadurch gekennzeichnet, dass die elektrischen Kontakte (14) der Werkzeugaufnahme (2) über deren zur Anlage an die freie Stirnfläche (9) des Kupplungsorganes (1) ausgebildeten Flächenabschnitt hervorstehen.

8. Vorrichtung nach einem der vorhergehenden Ansprüche, dadurch gekennzeichnet, dass das Kupplungsorgan (1) mit vier Zentrierzapfen (47) versehen ist, die zentralsymmetrisch an einem gegenüber der freien Stirnfläche (9) des Kupplungsorganes zurückversetzten Stirnflächenabschnitt angeordnet sind.

9. Vorrichtung nach einem der vorangehenden Ansprüche, dadurch gekennzeichnet, dass die Werkzeugaufnahme (2) einen zentralsymmetrischen, plattenartigen Körper (6) aufweist, entlang dessen Peripherie die Kanäle (16) und die elektrischen Kontakte (14) angeordnet sind, und dass die Zentrierplatte (13) zentrisch in

EP 0 285 557 B1

der Mitte des plattenartigen Körpers (6) befestigt ist.

10. Vorrichtung nach Anspruch 9, dadurch gekennzeichnet, dass der plattenartige Körper (6) der Werkzeugaufnahme (2) im Bereich der Öffnungen (52) der Zentrierplatte (13) mit in die Oberfläche des plattenartigen Körpers (6) eingelassenen Hohlräumen (53) versehen ist.

11. Verwendung der Vorrichtung nach einem oder mehreren der vorangehenden Ansprüche als Schnittstelle zur auswechselbaren Montage von pneumatisch und/oder elektrisch betätigten Werkzeugen an einem Industrie-Roboter.

## Revendications

1. Dispositif de fixation détachable d'outils sur un appareil manipulateur, comprenant un porte-outil (2) et un organe d'accouplement (1), monté sur l'appareil manipulateur, dans lequel ce porte-outil est fixé de façon détachable et est verrouillé par complémentarité de formes, cet organe d'accouplement (1) comprenant un raccord d'air comprimé, qui communique avec une sortie d'air, prévue sur le porte-outil, lorsque celui-ci est fixé, ainsi que des raccords électriques qui coopèrent avec des éléments de liaison électrique, prévus sur le porte-outil, lorsque celui-ci est fixé, le dispositif comportant les particularités suivantes :

a) l'organe d'accouplement comporte une surface frontale libre (9), sur laquelle le porte-outil (2) fixé prend appui, ainsi que plusieurs conduits (36) et plusieurs contacts électriques (11), qui débouchent dans cette surface frontale libre (9),

b) dans la zone de la surface frontale libre (9) de l'organe d'accouplement (1), il est prévu plusieurs tétons de centrage (47) en saillie et convergeant d'une manière conique vers leur pointe et

c) le porte-outil (2) comporte une section de surface qui est agencée de façon à permettre une venue en appui sur la surface frontale libre (9) de l'organe d'accouplement (1) et qui est pourvue de conduits (16) et de contacts électriques (14), qui sont disposés d'une manière correspondante,

caractérisé par la particularité suivante :

d) dans la zone de ladite section de surface du porte-outil (2), il est disposé une plaque de centrage (13), rigide dans la direction de son plan, qui comporte des trous (52) qui sont disposés d'une manière correspondante aux tétons de centrage (47) de l'organe d'accouplement (1) et qui, lorsque le porte-outil est fixé, entourent la partie convergente conique (48) des tétons de centrage (47) d'une façon telle que la plaque de centrage (13) est déformée élastiquement suivant la direction axiale dans la zone de ces trous (52).

2. Dispositif suivant la revendication 1, caractérisé en ce que l'organe d'accouplement (1) est pourvu en outre de plusieurs électrovannes (31) associées aux différents conduits (36).

3. Dispositif suivant la revendication 2, caractérisé en ce qu'au moins une partie des électrovannes (31c, 31d, 31e, 31f) communiquent, du côté de leur entrée, avec le raccord d'air comprimé (29).

4. Dispositif suivant la revendication 2, caractérisé en ce que l'organe d'accouplement (1) est pourvu d'un autre raccord d'air comprimé (38) qui communique avec au moins l'une (31a, 31b) des électrovannes, du côté de son entrée.

5. Dispositif suivant la revendication 2, caractérisé en ce que l'organe d'accouplement (1) est pourvu en outre d'un raccord d'air d'aspiration, ou de dépression, (39) qui communique avec au moins l'une (31g) des électrovannes, du côté de son entrée.

6. Dispositif suivant l'une des revendications précédentes, caractérisé en ce que les contacts électriques (11) de l'organe d'accouplement sont constitués par des fiches (45), à action de ressort suivant la direction axiale, dont les pointes (11) situées du côté de la surface frontale libre (9) de l'organe d'accouplement sont en retrait d'une faible distance par rapport à cette surface frontale.

7. Dispositif suivant l'une des revendications précédentes, caractérisé en ce que les contacts électriques (14) du porte-outil (2) font saillie au-delà de la section de surface prévue pour venir en appui sur la surface frontale libre (9) de l'organe d'accouplement (1).

8. Dispositif suivant l'une des revendications précédentes, caractérisé en ce que l'organe d'accouplement (1) est pourvu de quatre tétons de centrage (47) qui sont disposés, suivant une symétrie par rapport à un point central, sur une section de surface frontale située en retrait par rapport à la surface frontale libre (9) de l'organe d'accouplement.

9. Dispositif suivant l'une des revendications précédentes, caractérisé en ce que le porte-outil (2) comprend un corps en forme de plaque (6), à symétrie par rapport à un point central, le long de la périphérie duquel les conduits (16) et les contacts électriques (14) sont disposés et en ce que la plaque de centrage (13) est fixée en position centrale au milieu de ce corps en forme de plaque (6).

10. Dispositif suivant l'une des revendications précédentes, caractérisé en ce que, dans la zone des trous (52) de la plaque de centrage (13), le corps en forme de plaque (6) du porte-outil (2) est pourvu d'évidements

6

(53) ménagés dans la surface de ce corps en forme de plaque (6).

11. Application d'un dispositif suivant une ou plusieurs des revendications précédentes en tant qu'interface prévue pour le montage d'outils à actionnement pneumatique et/ou électrique, d'une manière interchangeable, sur un robot industriel.

## Claims

1. A device for the detachable mounting of tools in a handling appliance, with a tool holder (2) and, arranged on the handling appliance, a coupling element (1) wherein the tool holder is conjugately locked and detachably mounted, the coupling element (1) having a compressed air connector which, when the tool holder is mounted, communicates with an air outlet provided thereon, and electric connectors which, when the tool holder is mounted, cooperate with electric connector elements provided thereon, with the following features :

a) the coupling element has a free front face (9) whereon there bears the mounted tool holder (2), as well as a plurality of ducts (36) and electric contacts (11) issuing in the free front face (9),

b) in the zone of the free front face (9) of the coupling element (1), provision is made for a plurality of projecting centring pins (47) conically tapering towards their tips,

c) the tool holder (2) has a surface sector designed for bearing on the free front face (9) of the coupling element (1), which sector is provided with correspondingly arranged ducts (16) and electric contacts (14), characterized by the following feature :

d) in the zone of the above mentioned surface sector of the tool holder (2), a rigid centring plate (13) is arranged having openings (52) disposed to correspond to the centring pins (47) of the coupling element (1), which openings cover the conically tapered part (48) of the centring pins (47) when the tool holder is mounted, in such a way that the centring plate (13) is elastically deformed in the axial direction in the zone of its openings (52).

2. A device according to claim 1, characterized in that the coupling element (1) is, moreover, provided with a plurality of electromagnetic valves (31) assigned to the individual ducts (36).

3. A device according to claim 2, characterized in that at least some of the electromagnetic valves (31c, 31d, 31e, 31f) communicates on the inlet side with the compressed air connector (29).

4. A device according to claim 2, characterized in that the coupling element (1) is provided with a further compressed air connector (38) communicating on the inlet side with at least one of the electromagnetic valves (31a, 31b).

5. A device according to claim 2, characterized in that the coupling element (1) is moreover provided with a vacuum line connector (39) which communicates on the inlet side with at least one of the electromagnetic valves (31g).

6. A device according to one of the preceding claims, characterized in that the electric contacts (11) of the coupling element have pins (45) sprung in the axial direction whose tip (11) on the side of the front face is slightly offset rearwards in relation to the free front face (9) of the coupling element.

7. A device according to one of the preceding claims, characterized in that the electric contacts (14) of the tool holder (2) project beyond its surface sector designed for bearing on the free front face (9) of the coupling element (1).

8. A device according to one of the preceding claims, characterized in that the coupling element (1) is provided with four centring pins (47), disposed with central symmetry on a sector of the front face offset in relation to the free front face (9) of the coupling element.

9. A device according to one of the preceding claims, characterized in that the tool holder (2) has a centrally symmetrical plate-type body (6) along whose periphery the duct (16) and the electric contacts (14) are disposed, and in that the centring plate (13) is centrally fixed at the centre of the plate-type body (6).

10. A device according to claim 9 characterized in that the plate-type body (6) of the tool holder (2) is provided in the zone of the openings (52) of the centring plate (13) with cavities (53) recessed into the surface of the plate-type body (6).

11. Use of the device according to one or more of the preceding claims as interface for the interchangeable mounting in pneumatically and/or electrically actuated tools in an industrial robot.

FIG. 1

FIG. 2

FIG. 3

FIG. 4

FIG. 5

FIG. 6

FIG. 7

FIG. 8